# EUROPEAN PATENT APPLICATION

(11) **EP 3 511 473 A1**
(43) Date of publication of application: **17.07.2019**
(21) Application number: 18211336.5
(22) Date of filing: 10.12.2018
(51) Int. Cl.: E03C 1/05

(54) **FAUCET WITH ELECTRONIC CONTROL AND OPERATING METHOD**

(30) Priority: 15.12.2017 ES 201731412
(71) Applicant: Sedal, S.L., 08740 Sant Andreu De La Barca (ES)
(72) Inventor: SALAS ARRANZ, Isaac, 08740 SANT ANDREU DE LA BARCA (ES); BELLO LARROCHE, Rafael, 08740 SANT ANDREU DE LA BARCA (ES)
(74) Representative: Ponti & Partners, S.L.P

(57) **Abstract**

The present invention relates to a faucet (10,100,200) with electronic control wherein there is manual flow regulation means of the faucet liquid inlets, whereto solenoid valves (12,102,202) are added in series which also allow the shut-off of liquid, where said solenoid valves are governed by control means, whereto is also connected a sensor system which discriminates the user's interactions both on the regulation means, and on the other main parts of the faucet body, said control system (15,105,205) acting on the solenoid valves according to said user's interaction on one and another area of the faucet with independent associated sensor system.

## Description

The present invention relates to a faucet for liquids, with manual outlet flow regulation, and where applicable of the liquid mixing proportion, which incorporates an electronic system to increase the functions thereof.

### Background of the invention

Mechanical mixer faucets are typical in the state of the art, which, by means of the use of actuators, in the form of one or two controls, allow the independent regulation of flow and liquid mixing proportion which are connected to said faucet, obtaining a regulation of the outlet properties of the mixed liquid, using, for example, a single mixer lever with two independent degrees of freedom, or through a two-handle mixer, which uses an individual control, with a single degree of freedom, to regulate the flow of each one of the liquids which are connected to said faucet.

These typical mechanical systems do not allow the instantaneous closure and opening of the passage of liquid, since it is necessary to perform certain routes with the regulation means actuators. With this configuration, it is even less possible for there to be a reopening at the exact flow and temperature position prior to the closing operation, since there are no references in the regulation means actuators which can help recover the last position of use prior to closure, and even less so instantaneously. In addition to the above, the manipulation of the regulation means actuators said faucets must be performed by specific positioning of said actuators, handles or controls, so that it requires the precise use of the user's hands for their manipulation, something which at times is not possible or it is preferable to avoid said manipulation with the hands.

The use of a sensor system, understood as the assembly of at least one sensor and its auxiliary elements to be installed in devices with the aim of allowing the control of a parameter related to the processes or functions that said device in which it is installed perform, and of its corresponding associated control electronics, with the aim of automating the opening and closing functions of the liquid flow supplied by a faucet, is known in the state of the art. Said sensor system uses capacitive or infrared sensors mainly for the detection of the user's interactions, understood as contact of the faucet by the user or approach of the user to the faucet in certain areas. This interaction detection allows the control electronics to act on the solenoid valves and allow the passage or perform the closure of the flow of liquid through its outlet spout, instantaneously.

This known faucet configuration, with electronic system to control liquid flow opening/closure, does not offer the possibility of precise and independent regulation of temperature and flow of a conventional faucet, such as those described above of mechanical type.

### Description of the invention

The faucet with electronic control and its operating method of the present invention successfully resolve the cited drawbacks, having other advantages that will be described.

The present invention is based on a novel configuration of an electronic control system adapted to a faucet with manual flow regulation of the liquids that enter it, it may have one or more actuators, handles or controls, which by means of the specific layout of the proximity and/or contact detection sensors, the strategic layout of the solenoid valves and its specific control system, allow combining the accuracy of the individual flow regulation of each one of liquids that enter the faucet at the user's will, together with the instant activation/deactivation of the water outlet by simple contact, all of this being able to maintain the same regulation conditions before closure, instantaneously on again activating the liquid outlet.

The faucet with electronic control object of the present invention has one or more inlets of liquid to the faucet, in the form of independent hydraulic inlet lines for liquid supply, where said faucet has flow regulation means of each one of said liquids entering the faucet, said regulation means being governed by a manual actuator, handle or control, it being possible that the faucet, typically, is of the mixer type which regulates with a single actuator, handle, the dosing and/or mixing of one, two or more flows from said inlets independent to the faucet, thanks to the degrees of freedom of movement of said actuator, or it also being possible that the faucet is of the type of an independent flow control for each liquid to be mixed, and possible combinations of the above two.

The faucet with electronic control with manual flow regulation shall comprise, at least, the following elements:
- one or more solenoid valves disposed in series with the flow regulation means, so that between each one of the inlets of liquid to the faucet and the outlet of liquid from the faucet there is at least one solenoid valve and said manual flow regulation means, so that said solenoid valves can be located in each one of the hydraulic inlet lines of the liquid to the faucet, or in the hydraulic outlet line, after the flow regulation of each one of the liquids entering said faucet;
- a first sensor located in the area of the regulation means actuator which detects the user's interactions in said area, understood as contact of the user on the faucet actuator or approach thereof to said actuator, including in said sensor the auxiliary elements of installation and connection thereof;
- a second sensor located in the area of the body/spout, which includes the areas of the faucet which do not form part of the actuators and their own connections, where the sensor detects the user's interactions in said area, understood as contact of the user on the faucet actuator or approach thereof to said actuator, including in said sensor the auxiliary elements of installation and connection thereof;
- a control system whereto, at least, the first and second sensors, and the solenoid valves are connected;

In this way, an essential characteristic of the invention is the discrimination of the interactions performed by the user between one and another area by both sensors, so that according to the detection means and therefore, the type of sensor used, the faucet configuration will be complemented to avoid possible interactions of contacts or approaches in one area, on the other area. This advantageous configuration of having an independent sensor for each area makes it possible to more precisely calibrate for the mass and conductivity of each area, it being easier to discriminate false positives, and therefore, have a greater security of not interpreting false contacts in one or another area.

In the case of using capacitive sensors as first or second sensor, or in both, for a correct operation, the area comprising the regulation means actuator is electrically insulated with respect to the area of the body/spout, where the latter area comprises the areas of the faucet which do not form part of the actuators and its own connections, with the control system receiving the discriminated signals from the user's interactions in one and/or another area.

The electrical insulation between the two areas is performed by means of the interposition between said areas of non-electricity conducting materials and thus avoiding direct contacts of one area with another, avoiding that interactions in one area, may be erroneously detected by the sensor of the other area and vice-versa.

In this way, the detection sensor of the user's interactions in the area of the actuator is electrically connected to said actuator, being electrically insulated from the rest of the faucet. In the case that there are two or more actuators in the same faucet, said detection sensor of the user's interactions in the area of the actuators, shall be electrically connected to each one of said actuators, in turn being electrically insulated from the rest of the faucet.

In the case of having proximity sensors installed in both areas, e.g. of infrared type, to be able to have a clear discrimination of the areas with which the user interacts there will be an orientation of the infrared emitters and receivers such that it does not allow the reception of infrared signals emitted in one area in the other.

The faucet with electronic control object of the invention has a solenoid valve configuration, whether those located in the hydraulic inlet or outlet lines, and in the liquid outlet pipe, or after the flow regulation means of each liquid and before said liquid outlet pipe, so that said configuration allows liquid passage closure by means of said solenoid valves although said regulation means are open, achieving this thanks to said solenoid valves being connected in series to the flow regulation means, where said flow regulation means also have the possibility of closing, opening and regulating the flow of the liquid which passes through them.

In this way, the solenoid valves can be installed, on the one hand, in each one of the independent liquid lines, whether at the inlet to the faucet or after the regulation means before the liquid mixing and its outlet, or on the other hand, in the same outlet pipe the liquids of each line have been regulated and mixed in the proportion determined by the regulation means of each liquid. From these possible configurations it is considered that the option of having an independent solenoid valve for each hydraulic line of each liquid to be mixed, obviously in configurations of two or more incoming liquids, has an important advantage with respect to the use of a single solenoid valve in the outlet pipe, and that in the latter, in the single solenoid valve operating condition, after regulation and mixing, closed and manual regulation means open, the independent hydraulic lines of the liquids are interconnected through the mixing area and there may be reflux if the cold and hot water supply pressures are different.

The control system of the present faucet includes control electronics which, preferably, are materialized in an electronic circuit with processing capacity, which has at least the signals sent by the sensors and which, according to the programming associated to said processing, i.e. the operating configuration of the control system, sends the corresponding signals to the solenoid valves for their opening or closing.

With respect to its advantageous operating method, the electronic control faucet object of the present invention starts from a determined position at each given time of the regulation means actuator, whether said position is closed or open in a specific flow regulation position for each liquid, the control system of said faucet having, on the one hand, the information on the state of the solenoid valves, and furthermore the signal input from the sensors associated to the discriminated detection of the interactions, by contact or approach, of the user in the area of the actuator and/or in the area of the main body/spout, so that after its processing and following the programmed instructions, said control system acts on the solenoid valves, so that:
- With the regulation means closed and the solenoid valves closed:
   ∘ If a signal is received from the sensor of the area of the regulation means actuator, the control system gives the signal to the solenoid valves to open, the water outlet being regulated by the position of the regulation means actuator, with which it has interacted.
   ∘ If a signal is received from the sensor of the area of the main body/spout of the regulation means, the control system gives the signal to the solenoid valves to open the flow passage, without liquid coming out and with no practical effect, since the regulation means remains closed.
- With the regulation means closed and the solenoid valves open:
   ∘ If a signal is received from the sensor of the area of the regulation means actuator, the control system maintains the solenoid valves open, the water outlet being regulated by the position of the regulation means actuator, with which it has interacted.
   ∘ If a signal is received from the sensor of the area of the main body/spout of the regulation means, the control system gives the signal to the solenoid valves to close the liquid flow passage, with no practical effect, since the regulation means remains closed.
- With the regulation means open and the solenoid valves closed:
   ∘ If a signal is received from the sensor of the area of the regulation means actuator, the control system gives the signal to the solenoid valves to open, with liquid exiting in the flow configuration position of the regulation means actuator, provided that the interaction is not to perform a closing manipulation of said regulation means.
   ∘ If a signal is received from the sensor of the area of the main body/spout of the regulation means, the control system gives the signal to the solenoid valves to open the flow passage, with liquid exiting in the flow configuration position of the regulation means.
- With the regulation means open and the solenoid valves open:
   ∘ If a signal is received from the area of the regulation means, the control system maintains the solenoid valves open, with liquid exiting in the flow configuration position of the regulation means actuator, provided that the interaction is not to perform a closing manipulation of said regulation means.
   ∘ If a signal is received from the sensor of the area of the main body/spout of the regulation means, the control system gives the signal to the solenoid valves to close the liquid flow passage.

In addition to this, the control system may include a timer function which allows the closure of the solenoid valves after a certain defined and configurable time has elapsed, with the solenoid valves open without having received signals from the sensors, leaving the faucet in a situation of unchanged regulation means and solenoid valves closed.

In this way, we have a faucet which by means of two differentiated liquid passage closing/opening elements, one manually controlled by actuators, which are the regulation means, and another electronic, which are the solenoid valves, whether associated to each one of the hydraulic liquid inlet lines, or the solenoid valves of the outlet after regulation and before the outlet pipe, or the solenoid valve of said outlet pipe, actuated by the control system, both closing/opening elements connected in series, where this faucet with electronic control has the possibility of performing, instantaneously by a simple approach or contact, the delivery of a flow of liquid with a determined configuration of said flow, and where applicable, mixing of the liquids, and an also instantaneous closure without having to modify said liquid mixing configuration on the regulation means to displace them to the closed position, also having the possibility of regulating the mixture and the liquid outlet flow without limitations or interferences of the instantaneous closing/opening system. In other words, any manipulation of the regulation means actuator causes the effect of opening, regulation or closure of the mixture and outlet passage thereof of the faucet, independently of the prior open/closed state of the solenoid valves, whilst an approach or contact on the main body/spout, only has the effect of exit of the mixture from the faucet if said regulation means are in a position different to the closed position.

### Brief description of the figures

For a better understanding of the aforementioned, drawings are attached wherein, schematically and only by way of non-limiting example, practical cases of embodiment are represented.
Figure 1 is a schematic view of a mixer faucet with two water inlets, one hot and one cold, with a control system schematically described.
Figure 2 is a schematic view of a two-handle faucet with two water inlets, one hot and one cold, with a control system schematically described.

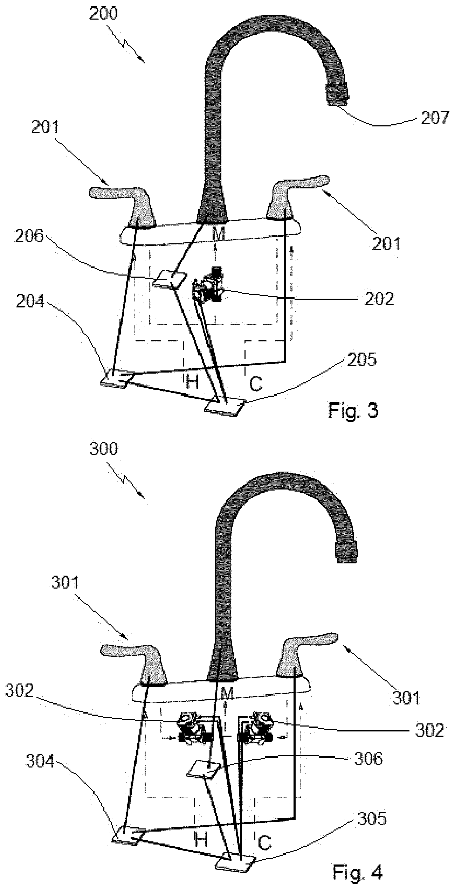

Figure 3 is a schematic view of a two-handle faucet with two water inlets, with the solenoid valve located in the hydraulic outlet line.
Figure 4 is a schematic view of a two-handle faucet with two water inlets, with the solenoid valves located in each one of the hydraulic lines after the regulation means of each inlet and before the outlet spout.

### Description of a preferred embodiment

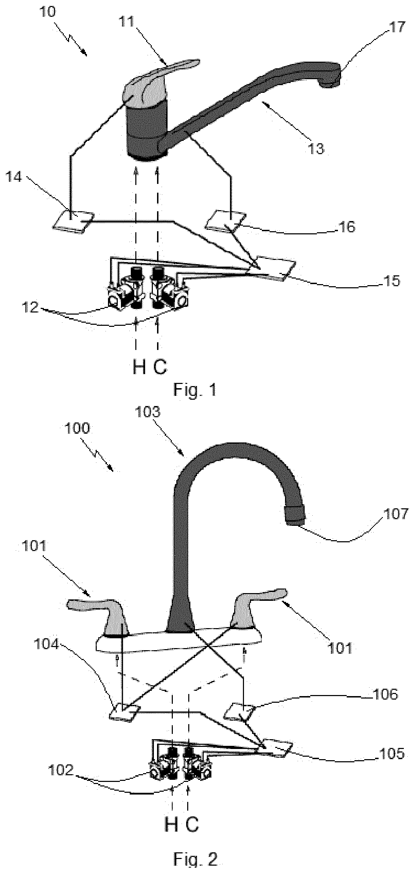

In the present preferred embodiment of the invention, and as shown in figure 1, the faucet (10) with electronic control is based on a mixer system of flow regulation of each one of the water inlets, hot (H) and cold (C), to perform their mixing in a conventional internal mixing cartridge, not shown in the figures, whereon the handle (11) acts, as regulation means actuator of the mixer system.

There is a solenoid valve (12) of the all-or-nothing type in each one of the water inlets (H, C) to the faucet (10), which allows the shut-off or passage of water of each one of said inlets, hot (H) and cold (C) water. This layout places the two water shut-off elements in series, either by action of the handle (11) or of the solenoid valves (12).

Two areas are differentiated in the faucet (10) with electronic control: on the one hand, the main body (13), or water outlet pipe (17), and on the other hand, the handle (11), where said areas (11, 13) are electrically insulated from one another by means of insulating material, not shown in the figures.

In the present embodiment, each one of these areas (11, 13) is electrically, independently and separately connected to a single capacitive sensor (14,16) associated to its insulated area, which is capable of detecting contacts or, alternatively, approaches, by the user in the area (11, 13) where they are installed, without interferences caused by the possible approaches or contacts performed in the other area (11, 13), making it possible to clearly discriminate the area (11, 13) where the user contacts, or where he/she has approached and therefore, said sensor (14,16) going on to generate an electric signal towards the control system (15) whereto it is connected, so that said control system (15) has the unequivocal information from which area (11, 13) it has received the user's interaction.

Said control system (15) is, furthermore, connected to the two solenoid valves (12) so that according to the state of said solenoid valves (12), closed or open, and according to the area (11, 13) from which the information on the user's interaction by approach or contact has been received, thanks to the processing means that the control system (15) has and which receive these signals/information, an action is performed on the solenoid valves (12) following the operating method configured in the control system (15).

In this way, starting from the handle (11) in a position which may be closed, without letting the hot (H) and cold (C) water mixture through, or in a specific open position of flow and of proportion of the mixture of the two liquids (H, C), and starting from the solenoid valves (12) in an open or closed position, we have that:
- Having the handle (11) closed and the solenoid valves (12) closed:
   ∘ If a signal is received by the capacitive sensor (14) of approach or contact in the handle (11), the control system (15) gives the signal to the solenoid valves (12) to open, enabling the passage of liquids to the cartridge and relying on a manipulation of the handle (11) regulating the flow passage and mixing and in this way proceed with the outlet of liquid.
   ∘ If a signal is received by the capacitive sensor (16) of an approach or contact in the main body, or spout, (13) the control system (15) gives the signal to the solenoid valves (12) to open the flow passage, without liquid coming out, since the handle (11) is closed.
- Having the handle (11) closed and the solenoid valves (12) open:
   ∘ If a signal is received by the capacitive sensor (14) of approach or contact in the handle (11) the control system (15) gives the signal to the solenoid valves (12) to open, the mixing outlet relying on a manipulation on the handle (11) regulating the flow and proportion of outlet of the mixture.
   ∘ If a signal is received by the capacitive sensor (16) of a contact or approach of the user in the main body, or spout, (13) the control system (15) gives the signal to the solenoid valves (12) to close the liquid flow passage.
- Having the handle (11) open and the solenoid valves (12) closed:
   ∘ If a signal is received by the capacitive sensor (14) of contact or approach, in the handle, the control system gives the signal to the solenoid valves (12) to open, with the water mixture instantaneously exiting in the flow configuration position where the handle is situated, with the modification of the mixture outlet relying on a manipulation on the handle (11) which modifies regulation of the flow and temperature or closure of the mixture outlet.
   ∘ If a signal is received by the capacitive sensor (16) of contact or approach, in the main body, or spout, the control system gives the signal to the solenoid valves (12) to open the flow passage of water, with the water mixture instantaneously exiting in the flow configuration position where the handle (11) is situated.
- Having the handle, or controls, open and the solenoid valves open:
   ∘ If a signal is received by the capacitive sensor (14) of contact or approach, in the handle, or controls, the control system maintains the solenoid valves (12) open, continuing the outlet of the water mixture in the flow configuration position where the handle is situated, the modification of the mixture outlet relying on a manipulation on the handle (11) which modifies the flow regulation or closure of the mixture outlet.
   ∘ If a signal is received by the capacitive sensor (16) of contact or approach, in the main body, or spout, the control system gives the signal to the solenoid valves (12) to close the flow passage of water cold (C) and hot (H), instantaneously interrupting the outlet of the mixture.

The control system (15) has a functionality, within this embodiment, which acts automatically and in programmed manner, on the solenoid valves (12) if no manipulation of the handle (11) is performed during a configurable time, to avoid the possible continuous waste of water due to inactivity.

In another example of embodiment, there is an electronic control faucet (100) wherein there are two actuators, regulation controls (101), one for each one of the two water inlets (C, H) that the faucet (100) has. In this embodiment, the configuration of said two-handle faucet (100) is similar to the previous one, with the exception that the regulation means actuators, i.e. of the controls (101) instead of a handle, are independent for each water inlet and the capacitive sensor (104), which detects the interaction, by contact or approach, of the user with said controls (101), is located electrically connecting said two controls (101), to equally have a single sensor (104) in this area, where said area comprised by both independent controls (101), the same as the previous embodiment, is electrically insulated from the area of the main body (103), or outlet spout (107), which will have its corresponding sensor (106) electrically insulated with respect to the controls (101).

The capacitive detection sensor (104) of the user's interaction with the area of the regulation means controls (101) is also connected to the control system (105), which (105) obtains the discriminated signals from each one of the sensors (104, 106), whether the interaction has been performed in said area of the regulation means controls (101), as has been in the main body (103), or spout.

Also alternatively to the two previous embodiments, electronic control faucets can be made such as the two previous ones, which combine actuators of the mixer regulation means with actuators of the independent control regulation means for regulation of the flow of one of the liquids that enters the faucet, such as would be the case, for example, of faucets that incorporate an osmotic water inlet in addition to typical hot and cold inlets.

Furthermore, there may be an embodiment which is based on a single actuator, control, for the regulation of the flow from a single liquid inlet, without there being mixing in the faucet, having an analogous configuration to this second two-handle embodiment, but with a single control associated to the single liquid inlet, and an operation, also analogous, of the sensors and of the control system used, since the configuration in series of the two elements susceptible for shut-off, solenoid valve and manual regulation means, are maintained as characterizing elements of the invention.

In another alternative embodiment, there is an electronic control faucet (200) which has an electronic control which has an actuator control (201) of each one of the flow regulation means provided by each one of the hydraulic water lines (C, H), i.e. of two-handle type, although it could analogously be made in a mixer one and that, instead of having a solenoid valve at each one of said inlets of the hydraulic water lines (C, H) to the faucet (200), there is a single solenoid valve (202) after the regulation and mixing (M) of the water and before the outlet (207) through the faucet (200) spout.

The solenoid valves (202) in this new embodiment, continues to be in series with the regulation means (201), and enables the closure of the water outlet by means of any of the two possibilities existing in the present invention, whether through the manual regulation means actuator (201) or through the actuation of the control system (205) on the solenoid valve (202) located after said regulation and mixing of the water, once the discriminated signals are received of the user's interaction in each one of the areas (201, 203), thanks to the location of the sensors (204, 206) in each one of said areas: area of the regulation means (201) and area of main body (203) or spout, which are electrically insulated from one another.

Also alternatively, there is an electronic control faucet (300) which has an actuator control (301) of each one of the flow regulation means provided by each one of the hydraulic water lines (C, H), i.e. also of two-handle type, and which, instead of having a solenoid valve in each one of said inlets of the hydraulic water lines (C, H) to the faucet (300), there is a solenoid valve (302) after each one of the regulation means in the independent hydraulic line of said liquid, before the mixture of the water in the faucet (300) spout.

The solenoid valves (302) in this new embodiment, continue to be in series with the regulation means (301), and enables the closure of the water outlet by any of the two possibilities existing in the present invention, whether by the manual regulation means actuator (301) or by the actuation of the control system (305) on the solenoid valves (302) located after each one of the regulation means (301), in the independent hydraulic lines of each liquid regulated and before the mixture of the water in the outlet pipe, performing said actuation once the discriminated signals have been received from the user's interaction in each one of the areas (301, 303), thanks to the location of the sensors (304, 306) in each one of said areas: area of the regulation means (301) and area of main body (303) or outlet pipe, spout, which are electrically insulated from one another.

The actions ordered by the control system of the electronic control faucets of these alternative embodiments are totally identical to the first embodiment, based on said input of discriminated signals from the sensors installed in each one of the two areas, and the management of the solenoid valves according to said interactions and the state of the solenoid valves.

With respect to the possible embodiments of the present invention, the sensors (14, 16, 104, 106, 204, 206), which are installed electrically connected to each one of the areas (11, 101, 201, 13, 103, 203) electrically insulated from one another, are capacitive for the detection of the user's interaction in said areas, by contact or by approach, although they may alternatively be of another type which allows the detection of said interaction, such as, for example, infrared or inductive.

In the case of having, alternatively, infrared proximity sensors, the two areas (the area comprised by both independent controls and the area of the main body) do not have to be obligatory electrically insulated, but it is simply necessary to have the orientation in directions not coincident with the reception of infrared signals emitted by the sensor of each one of the areas, so that in this way there are no interferences between the interactions detected in one area with those of the other area. Orienting the infrared proximity sensors in non-coincident directions involves each one of sensors having an infrared signal reception direction which are opposite or in an angle which does not allow the refraction of the infrared signals from one sensor in the other.

Despite the fact that reference has been made to a specific embodiment of the invention, it is evident for a person skilled in the art that the faucet with electronic control and its operating method is susceptible to numerous variations and modifications and that all the details mentioned can be replaced by other technically equivalent ones, without departing from the scope of protection defined by the attached claims.

## Claims

1. Faucet with electronic control of those that have of one or more inlets of liquid to the faucet, said faucet (10, 100, 200) having flow regulation means of each one of said incoming liquids, actuated by a manual actuator (11, 101, 201), **characterized in that** the faucet (10, 100, 200) comprises, at least:
• one or more solenoid valves (12, 102, 202) disposed in series with the flow regulation means, so that between each one of the faucet liquid inlets (H, C) and its outlet (17, 107, 207) there is at least one solenoid valve and said manual flow regulation means;
• a first sensor (14, 104, 204) located in the area of the actuator (11, 101, 201) which detects the user's interactions in said area;
• a second sensor (16, 106, 206) located in the area of the body/spout (13, 103, 203) which detects the user's interactions in said area;
• a control system (15, 105, 205) whereto, at least, the first and second sensors (14, 16, 104, 106, 204, 206) are connected, as well as the solenoid valves (12, 102, 202);
wherein the first (14, 104, 204) and/or second sensor (16, 106, 206) are capacitive sensors, having the area of the actuator (11, 101, 201) electrically insulated from the area of the body/spout (13, 103, 203);
wherein, the detection sensor (14) of the user's interactions in the area of the actuator (11) is electrically connected to the actuator (11) or to each one of the actuators (101, 201) and the sensor (14, 104, 204) being electrically insulated from the rest of the faucet (10);
and wherein the first sensor (14, 104, 204) and the second sensor (16, 106, 206) emit discriminated signals towards the control system (15, 105, 205) for any of the interactions performed in each one of the areas, said control system (15, 105, 205) sending opening or closing signals to the solenoid valves according to the operating configuration of said control system (15, 105, 205).

2. Faucet with electronic control according to claim 1, wherein the faucet (10, 100, 200) has a solenoid valve in each one of the liquid inlets (H, C) to said faucet (10, 100, 200).

3. Faucet with electronic control according to claim 1, wherein the faucet (10, 100, 200) has a solenoid valve in the hydraulic outlet line, after the regulation and mixing of the flow of each one of the liquids entering said faucet (10, 100, 200).

4. Faucet with electronic control according to claim 1, wherein the faucet (10, 100, 200) has a solenoid valve in each one of the independent hydraulic lines after its regulation and before the mixture of the flow of each one of the liquids entering said faucet (10, 100, 200).

5. Faucet with electronic control according to claim 1, wherein the control system (15, 105, 205) is formed by an electronic circuit which at least has the inlets corresponding to the data sent by the sensors (14, 16, 104, 106, 204, 206) and the outlet of the corresponding signals to the solenoid valves (12, 102, 202) for their closing/opening.

6. Faucet with electronic control according to claim 1, wherein the sensors (14, 16, 104, 106, 204, 206) used to capture the user's interaction, are sensitive to contact or approach, are infrared and/or inductive capacitive sensors.

7. Faucet with electronic control for mixing liquids according to claim 1, wherein the electrical insulation between the regulation means actuators (11, 101, 201) and the other differentiated parts corresponding to the body/spout (13, 103, 203) of the faucet is performed by means of non-electricity conducting materials.

8. Operating method of a faucet with electronic control of those that have the technical characteristics indicated in the preceding claims, **characterized in that** the faucet (10, 100, 200) has at each given time a determined position of the actuator (11, 101, 201) which governs the manual regulation means, whether said position is closed or open in a specific flow regulation position for each liquid, the control system (15, 105, 205) of said electronic control faucet (10, 100, 200) having the information on the state of the solenoid valves (12, 102, 202) and, furthermore, the signal input from the sensors (14, 16, 104, 106, 204, 206) associated to the discriminated detection of the interactions, by contact or approach, of the user in the area of the actuator (11, 101, 201) and/or in the area of the main body/spout (13, 103, 203), wherein the control system (15, 105, 205) acts on the solenoid valves (12, 102, 202), taking this information into account, and so that:
• With the regulation means closed and the solenoid valves (12, 102, 202) closed:
∘ If a signal is received from the sensor (14, 104, 204) of the area of the regulation means actuator (11, 101, 201), the control system (15, 105, 205) gives the signal to the solenoid valves (12, 102, 202) to open, the water outlet being regulated by the position of the regulation means actuator (11, 101, 201), with which it has interacted.
∘ If a signal is received from the sensor (16, 106, 206) of the area of the main body/spout (13, 103, 203) of the regulation means, the control system (15, 105, 205) gives the signal to the solenoid valves (12, 102, 202) to open the flow passage, without liquid coming out and with no practical effect, since the regulation means remain closed.
• With the regulation means closed and the solenoid valves (12, 102, 202) open:
∘ If a signal is received from the sensor (14, 104, 204) of the area of the regulation means actuator (11, 101, 201), the control system (15, 105, 205) maintains the solenoid valves (12, 102, 202) open, the water outlet being regulated by the position of the regulation means actuator (11, 101, 201), with which it has interacted.
∘ If a signal is received from the sensor (16, 106, 206) of the area of the main body/spout (13, 103, 203) of the regulation means, the control system (15, 105, 205) gives the signal to the solenoid valves (12, 102, 202) to close the liquid flow passage, with no practical effect, since the regulation means (11, 101, 201) also close said passage of liquid.
• With the regulation means open and the solenoid valves (12, 102, 202) closed:
∘ If a signal is received from the sensor (14, 104, 204) of the area of the regulation means actuator (11, 101, 201), the control system (15, 105, 205) gives the signal to the solenoid valves (12, 102, 202) to open, with liquid exiting in the flow configuration position of the regulation means actuator (11, 101, 201), provided that the interaction is not to perform a closing manipulation of said regulation means.
∘ If a signal is received from the sensor (16, 106, 206) of the area of the main body/spout (13, 103, 203) of the regulation means, the control system (15, 105, 205) gives the signal to the solenoid valves (12, 102, 202) to open the flow passage, with liquid exiting in the flow configuration position of the regulation means (11, 101, 201).
• With the regulation means (11, 101, 201) open and the solenoid valves (12, 102, 202) open:
∘ If a signal is received from the area of the regulation means (11, 101, 201), the control system (15, 105, 205) maintains the solenoid valves (12, 102, 202) open, with liquid exiting in the flow configuration position of the regulation means actuator (11, 101, 201), provided that the interaction is not to perform a closing manipulation of said regulation means.
∘ If a signal is received from the sensor (16, 106, 206) of the area of the main body/spout (13, 103, 203) of the regulation means, the control system (15, 105, 205) gives the signal to the solenoid valves (12, 102, 202) to close the liquid flow passage.

9. Operating method of a faucet with electronic control according to claim 8, wherein the control system (15, 105, 205) has a timer function which allows the closure of the solenoid valves (12, 102, 202) after an operating time without manipulation, leaving the faucet (10, 100, 200) in the regulation means configuration unchanged and of the solenoid valves (12, 102, 202) closed.
